# EUROPEAN PATENT SPECIFICATION

(11) **EP 1 012 665 B1**
(45) Date of publication and mention of the grant of the patent: **26.03.2003**
(21) Application number: 98942130.0
(22) Date of filing: 19.08.1998
(51) Int. Cl.: G03B 21/10

(54) **REAR PROJECTION DISPLAY**
RÜCKPROJEKTIONSANZEIGEGERÄT
AFFICHEUR A PROJECTION PAR TRANSPARENCE

(30) Priority: 09.09.1997 US 925855
(43) Date of publication of application: 28.06.2000
(73) Proprietor: MINNESOTA MINING AND MANUFACTURING COMPANY, St. Paul, Minnesota 55133-3427 (US)
(72) Inventor: BOYD, Gary, T., Saint Paul, MN 55133-3427 (US); MILLER, William, D., Saint Paul, MN 55133-3427 (US)
(74) Representative: VOSSIUS & PARTNER
(86) International application number: US9817209
(87) International publication number: WO99013378

(56) References cited:
- EP-A- 0 657 769
- EP-A- 0 783 133
- US-A- 5 335 022
- PATENT ABSTRACTS OF JAPAN vol. 016, no. 035 (P-1304), 28 January 1992 & JP 03 243932 A (CANON INC), 30 October 1991

## Description

### Background

This invention relates generally to rear projection displays, and more 5 particularly to rear projection displays using polarization sensitive beam splitters to fold the optical path of the projection system.

Rear projection display devices, such as projection televisions, are well known. Such systems generally include a video source, projection optics, and a screen. More recently, rear projection type displays have incorporated liquid crystal 10 display (LCD) projectors as the imaging source. LCD projectors are often used to reduce the overall size of the rear projection device. It has been proposed that such devices can be employed not only as televisions, but in any type of display device including computer monitors and the like.

Over the past few years, efforts have been made to reduce the overall size of 15 the projection devices, particularly in the depth direction. Depth reduction is important to accommodate use in smaller rooms in a home, for example, or to fit on a desktop, as in the case of a computer monitor. One way to reduce the overall depth of a rear projection system is to use one or more mirrors to fold the optical path of light from the image projector to the screen. In such a system, a projected 20 cone of light travels a greater distance within a given volume by redirecting the cone of light back and forth over a given distance within the housing of the projection device. As the light travels over at least a portion of the distance two or more times, the cone of light expands to fill a desired screen dimension. One particular folded optical path uses polarized light to fold the optical path by 25 selectively reflecting and transmitting light depending on its polarization.

Examples of conventional rear projection displays are disclosed in Patent abstract of Japan Vol. 016, no. 035 (P-1304), 28 January 1992 & JP-A-03 243932 (CANON INC), 30 October 1991, EP-A-0 783 133, US-A-5 335 022, EP-A-0 657 769.

### Summary

Generally, the present invention relates to rear projection display systems which use different polarization states to fold an optical projection path as defined in claim 1. In one 30 embodiment, a rear projection display includes a screen, oriented in the direction of a first plane, having a height and a width. The display further includes a polarization sensitive beam splitter extending in the direction of a second plane which forms an angle with the first plane. The polarization sensitive beam splitter transmits light of a first polarization state and reflects light of a second polarization state. The distance between the screen and a most distant point on the polarization sensitive beam splitter measured along the direction orthogonal to the screen is less than the smaller of the height and the width of the screen. A light source projects a light beam onto the polarization sensitive beam splitter. Light of the first polarization state is transmitted through the polarization sensitive beam splitter. A polarization state converter receives and converts the light transmitted through the polarization sensitive beam splitter from the first polarization state to the second polarization state. The converted light is incident on and reflected by the polarization sensitive beam splitter towards the screen.

In one embodiment, the polarization sensitive beam splitter reflects light of one linear polarization state and transmits light of another linear polarization state. One such beam splitter includes a polymeric multilayer optical film. In still another embodiment, the polarization sensitive beam splitter reflects one type of circularly polarized light and transmits another.

One embodiment of the invention includes a light sensor which receives light transmitted through the screen. The light sensor may be used to remotely control functions of the display.

In accordance with still another embodiment of the invention, a rear projection display includes a light source which projects a light beam along an optical path with a cone angle of at least 15°. A polarization sensitive beam splitter is disposed in the optical path of the light beam and is operative over the entire range of incidence angles to substantially transmit incident light of a first polarization state and reflect incident light of a second polarization state. A polarization state converter receives light transmitted through the polarization sensitive beam splitter and converts the received light to the second polarization state. The converted light is reflected by the polarization sensitive beam splitter toward a screen for display.

In still another embodiment, a rear projection display includes an image source which is disposed within a housing of the display such that at least a portion of the image source is in a space between the polarization sensitive beam splitter and an adjacent portion of the housing.

In still another embodiment it is provided a method as defined in claim 28.

In still another embodiment it is provided a rear projection computer monitor as defined in claim 29.

The above summary of the present invention is not intended to describe each illustrated embodiment or every implementation of the present invention. The figures and detailed description which follow more particularly exemplify these embodiments.

### Brief Description of the Drawings

The invention may be more completely understood in consideration of the following detailed description of various embodiments of the invention in connection with the accompanying drawings, in which:
Figures 1 and la illustrates a schematic cross-sectional and exploded view of 15 a rear projection display in accordance with one embodiment of the present invention;
Figure 2 illustrates a manner in which improved off-angle performance of a rear projection display in accordance with an embodiment of the present invention can be achieved;
20 Figure 3 illustrates an advantage of a folded optical path in accordance with an embodiment of the invention;
Figure 4 illustrates another advantage of a folded optical path in accordance with an embodiment of the invention;
Figure 5 illustrates still another advantage of a folded optical path in 25 accordance with one embodiment of the invention;
Figure 6 illustrates second embodiment of the invention which facilitates vertical and horizontal tiling of multiple rear projection displays;
Figure 7 illustrates a front view of tiled rear projection displays in accordance with another particular embodiment of the invention;
30 Figure 8 illustrates still another embodiment of the invention;
Figure 9 illustrates still another embodiment of the invention; and

### Detailed Description

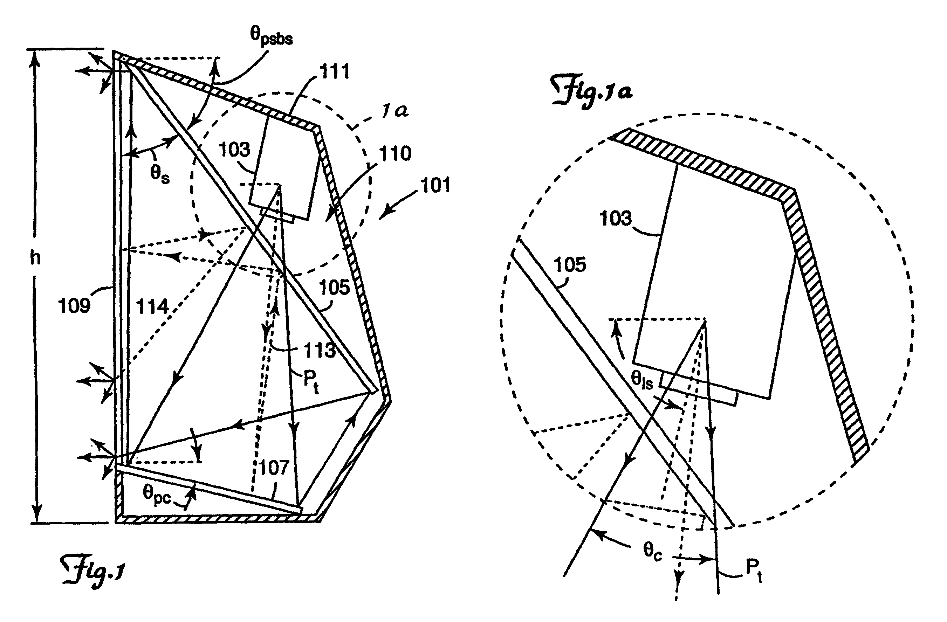

The present invention is applicable to a number of different rear projection display systems. One particular embodiment of a rear projection display system is illustrated in Figure 1 and in the exploded view of Figure la. The rear projection display 101 includes an image source 103, a polarization sensitive beam splitter 105, a polarization state converter 107 and a screen 109. The screen 109 generally has a height and width dimension and is oriented in a plane. The screen 109 may be flat or may have some other shape. For example, the screen may be slightly curved. The relationship between the height and width of the screen is typically determined by the aspect ratio of the display. While the terms height and width are used to facilitate a discussion of the invention, these terms are relative to the orientation of the display and should not be deemed to limit the invention to a particular orientation. The polarization sensitive beam splitter 105 forms an angle θₛ with the plane of the screen 109.

The general arrangement of a projection system like the one depicted in Figure 1 provides a number of advantages. For example, the horizontal distance d between the screen 109 and the most distant point on the polarization sensitive beam splitter 105, measured along a direction orthogonal to the plane of the screen, may be less than the smaller dimension of the height and width of the screen. The projection system can also accommodate relatively large angles of incidence on the various components with substantially uniform performance. Additionally, a portion of the image source can be disposed within the housing 111 in the space 110 defined between the polarization sensitive beam splitter 105 and an adjacent portion of the housing 111. A polymeric multilayer optical film can be used as the polarization sensitive beam splitter 105 to provide particularly uniform performance over a wide range of incidence angles.

In the embodiment illustrated in Figure 1, the image source 103 is positioned behind the polarization sensitive beam splitter 105 and is used to project an image to be displayed on the screen 109. The optical path of the projected image in the illustrated embodiment sequentially includes the polarization sensitive beam splitter 105 (in transmission), the polarization state converter 107, the polarization sensitive beam splitter 105 (in reflection) and the screen 109. As described more fully below, the polarization sensitive beam splitter 103 is used to transmit light of one polarization state and reflect light of another polarization state. It should be noted that a polarization sensitive beam splitter will typically transmit and reflect at least some of light of each polarization state. However, as used herein, one state is optimally transmitted through the polarization sensitive beam splitter while the other state is optimally reflected by the polarization sensitive beam splitter.

The image source 103 can be used to produce a substantially polarized image (i.e., a group of light rays having a similar polarization which form an image, when collectively projected on a screen). The polarized image has a polarization state Pₜ which is optimally transmitted through the polarization sensitive beam splitter 105. The image projected by the image source depends on the type of application for which the rear projection display is employed. In a rear projection television, for example, the image projected corresponds to a television signal received from an antenna, cable, satellite dish, etc. In a rear projection computer monitor, the image corresponds to the video output of a computer. In each case, the rear projection display may further include audio reproduction equipment as is known in the art.

After passing through the polarization sensitive beam splitter 105 the image is incident on the polarization state converter 107. The polarization state converter 107 converts the polarization state of the image to a reflection polarization state Pᵣ. The converted light beam is reflected by the polarization sensitive beam splitter 105 towards the screen 109. The image is transmitted through screen 109 for viewing. In the illustrated embodiment, the positioning of the image source behind the polarization sensitive beam splitter 105 and screen 109 permits the display device to be constructed in a more compacted manner. The invention also facilitates a construction in which the overall height of the rear projection display device is less than twice the height of the screen with a relatively small depth.

In one embodiment of the invention, linear polarization is used. The polarization sensitive beam splitter 105 optimally transmits linearly polarized light oriented in a first direction and optimally reflects linearly polarized light oriented substantially orthogonal to the first direction. The image source may include, for example, a projector which outputs an image which is substantially linearly polarized such as a liquid crystal display (LCD) projector. The linearly polarized image produced by the image source 103 is projected on the polarization sensitive beam splitter 105 with a polarization state Pₜ which transmits through the polarization sensitive beam splitter 105. The polarized image transmitted through the beam splitter is incident on a polarization state converter 107. When using a linear polarization sensitive beam splitter, the polarization state converter 107 may be include a retarder and a mirror. This combination rotates the linear polarization direction of the image source to produce a light beam having a linear polarization Pᵣ which is reflected by the linear polarization sensitive beam splitter. Thus, the rotated polarized image is reflected by the linear polarization sensitive beam splitter towards the screen 109.

While a linearly polarized light source is described, it will be appreciated that unpolarized light such as from a cathode ray tube (CRT) could be used. In such an embodiment the linear polarization sensitive beam splitter further functions as a polarizer for the projected light. In such a system, however, approximately 50% of the initial light will be reflected by the beam splitter and will not contribute to the brightness of the final image.

Light transmitted through the screen 109 is spread at an appropriate viewing angle. Any of a number of known rear projection screens may be used. For example, commercially available rear projection screens available from Dai Nippon Company of Japan and Stewart Company of Torrance California are suitable for the invention. Beaded screens available from the Minnesota Mining and Manufacturing Company of Minnesota could also be used. One screen, particularly suited for use in such a rear projection display system, includes a diffuser which diffuses the light. The diffuser may be a bulk diffuser or a surface diffuser. The viewing angle of the screen 109 may be adjusted in order to accommodate a particular end-use application for the rear projection display. For example, if the rear projection monitor is to be vertically and horizontally tiled, as described more fully below, relatively large vertical and horizontal viewing angles may be required to provide uniform brightness. Additional screen elements, such as lenticular and Fresnel lenses, for example, may also be used. Screens also vary in contrast, gain and uniformity. The type of screen used will generally be selected in view of the ultimate application for the display device.

As noted above, the embodiment illustrated in Figure 1 can be arranged in a manner which significantly reduces the overall size of the display. The size of the display depends in part on the projection cone angle θ_{c} (i.e., the angular width of a cone of light rays diverging from the light source). Generally, the cone angle is selected to be large as possible under the geometric constraints of the optical path in order to minimize the overall dimensions of the system. If the cone angle is selected to be too large in a folded optical path, however, certain light rays within the cone angle may be blocked by components of the system in one or more of the folds. For a given cone angle, the arrangement of Figure 1 provides a relatively long optical path and permits construction with a small depth dimension.

The arrangement of Figure 1 permits the use of relatively large cone angles. For example, a cone angle greater than 10° can be used with substantially uniform performance of the polarization sensitive beam splitter over the range of incidence angles. Cone angles ranging from 15° to 50° are particularly suited to the invention and provide relatively uniform performance for the various angles of incidence. A suitable cone angle can be selected in consideration of the size of the projector, the requirements for height and depth of the projection system and/or the desired relative positioning of the various optical components. The projected image size on the screen is also a function of the cone angle.

Designs which minimize depth and/or height of the overall rear projection display can be achieved using cone angles greater than 30°. For example, cone angles ranging from 30° to 36° are well suited for such rear projection displays. Where vertical tiling of multiple units on top of one another is desired, the relative orientation of the projector and the polarization state converter must be taken into account. Generally, if vertical tiling is not required, the depth of the system can be reduced by changing the orientation of the image projector, polarization sensitive beam splitter and/or polarization state converter. Such changes, however, may increase the overall height of the system.

In many instances, it is also desirable to orient the various elements of the rear projection display in a manner which provides normal cone incidence on the screen 109. The angular orientation of the components may be described by the angle θ_{psbs} of the polarization sensitive beam splitter 105, the angle θ_{pc}, of the polarization state converter 107 and the angle θᵢₛ, of the light source 103. The angles are depicted in Figure 1 and are measured from a line orthogonal to the plane of the screen 109. Normal cone incidence on the screen 109 can be obtained by selecting the angles of the various components to satisfy the relationship 2θ_{psbs} = θₗₛ+2θ_{pc}. It is also possible to adjust the angular incidence on the screen to optimize viewing in different applications. A system having a projection cone angle θ_{c} can be constructed with a small depth dimension by selecting the angle θₛ between the screen 109 and the polarization sensitive beam splitter 105 to satisfies the relationship θₛ = 45° - θ_{c}/4.

As noted above, the screen 109 diffuses the light as it transmits through the screen. This provides for improved uniform brightness over a wide range of viewing angles. The screen 109 may also have its rear surface coated with an antireflection (AR) coating or be matted in order to reduce unwanted ghost images. The source of one particular unwanted ghost image is illustrated by ray path 113 in Figure 1. Light exiting the image source transmits through the polarization sensitive beam splitter 105 and is converted by the polarization state converter 107 to a reflection polarization state Pᵣ. The light is reflected by the polarization sensitive beam splitter 105 toward the screen 109. A portion of the light may be reflected from the back surface of the screen 109 rather than being transmitted through the screen 109. This portion of light is then again reflected from the polarization sensitive beam splitter 105 and exits the screen as a ghost image at point 114. A matte or antireflection (AR) coated rear surface of the screen 109 significantly reduces or eliminates the ghost image by reducing or preventing reflection from the rear surface of the screen. When the screen is made up of multiple elements, it is generally desirable to dispose the AR coating on the rearmost surface of the elements (e.g., the surface closest to the polarization sensitive beam splitter).

As noted above, a linear polarization sensitive beam splitter may be used in certain embodiments. A polymeric multilayer optical film is particularly suited for use in such a system. A linear polarization sensitive beam splitter may be constructed by laminating or otherwise adhering such a film to a sheet of glass or other optically neutral substrate. Suitable lamination techniques for laminating multilayer optical films to glass include wet lamination roll processes, autoclave lamination processes and pressure sensitive adhesive (PSA) roll lamination processes. The substrate should be substantially flat as should the polymeric multilayer optical film when laminated to the substrate. Multilayer optical films laminated to glass are available from the Minnesota Mining and Manufacturing Company. Other potential lamination sources include Lamination Technologies of Los Angeles, California, Optical Coating Laboratories, Inc. of Peteluma, California, Nitto Denko Company of Japan, Sumitomo Chemical Company of Japan and San Rietz of Japan. When the reflective polarizing film is laminated to glass, the glass side of the laminate can be placed toward the image source to help reduce ghost images which might otherwise result from reflections at the glass-air interface of the polarization sensitive beam splitter back towards the screen.

One type of polymeric reflective polarizing films is available from the Minnesota Mining and Manufacturing Company under the name of Dual Brightness Enhancement Film (DBEF). Other reflective polarizing films are described in U.S. patent applications Serial No. 08/402,041, filed March 10, 1995 and entitled Optical Film corresponding to US-A-5 882 774, and Serial No. 08/610,092, filed February 29, 1996, entitled An Optical Film corresponding to US-A-5 825 543. As described therein, such films have high performance over a wide range of incidence angles and are particularly suited for use in the present invention. A polymeric multilayer optical film based linear polarization sensitive beam splitter can be oriented to reflect p-polarized light and transmit s-polarized light or to reflect s-polarized light and transmit p-polarized light. The orientation is selected in consideration of the polarization direction of light output from the image source. In general, the projection system can be constructed to use any orientation of the polymeric multilayer optical film. For example, orientations using mixed polarization states (e.g., p and s) can be used.

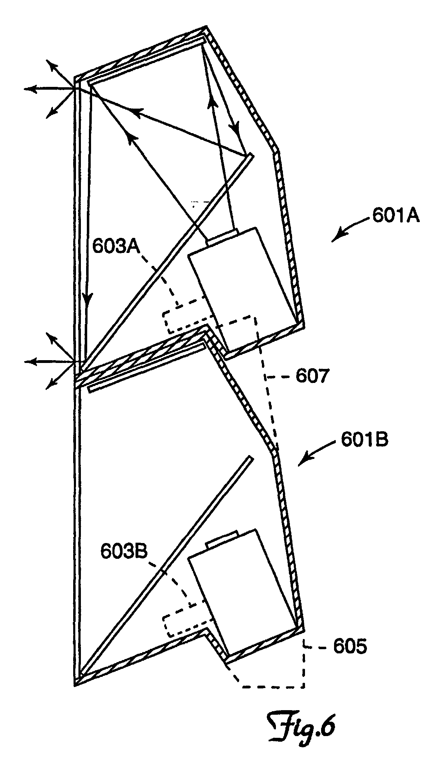

In the embodiment of the projection system of the present invention illustrated in Figure 1, the image source is positioned above the polarization sensitive beam splitter. This arrangement tends to reduce any back reflection of overhead ambient light which may transmit through the screen. Such an arrangement may also provide improved transfer of heat generated by the light source away from the interior components. The general geometry, however, can be readily inverted in the vertical direction (see Figure 6). The display could also be oriented in a manner which rotates the entire system by 90° about an axis orthogonal to the plane of the screen. The display could also be tipped until the screen is located in a plane substantially horizontal. Such a display could be incorporated into the surface of a desk, for example, for computer monitor applications.

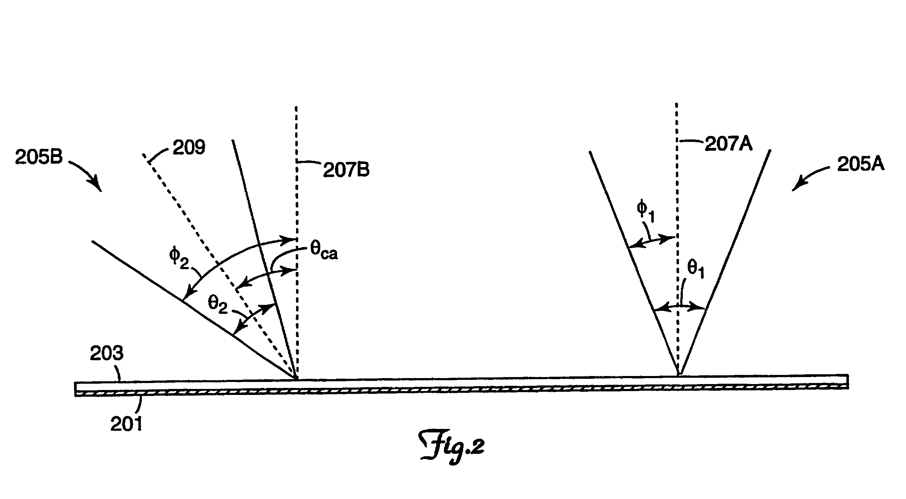

The present invention provides a number of advantages by virtue of its design and optical path, examples of which are illustrated in Figures 2-5. Some advantages are particularly important when a linear polarization sensitive beam splitter is used. For example, the linear polarization sensitive beam splitter may serve multiple functions by virtue of the optical path and design.

In systems using linearly polarized light, a polarization state converter can be used to rotate the polarization direction of light as illustrated in Figure 2. The polarization state converter includes a mirror 201 and a ¼-wave retarder 203. Commercially available ¼-wave retarders suitable for use in the present invention are available from Nitto Denko Corporation of Japan. In Figure 2, the ¼-wave retarder is disposed on the mirror. It should be appreciated, however, that physical proximity is not required. In general, the retarder can be located anywhere in the optical path between transmission through the polarization sensitive beam splitter and reflection by the polarization sensitive beam splitter, provided the path permits the light to pass through the retarder twice.

The ¼-wave retarder/mirror combination rotates the polarization direction of linearly polarized light by 90° for example, from a transmission polarization state Pₜ (e.g., p- or s-polarized light) to a reflection polarization state Pᵣ (e.g., s- or p-polarized light) . To maximize performance, it is generally desirable that the retarder/mirror combination rotate the polarization state of substantially all of the incident light by the same amount. Typical retarders are quite sensitive to the incoming angle of light. The angular sensitivity of such retarders is described in European Patent Application No. EP 0,783,133, for example. As a result of the angular sensitivity of the retarder, the polarization of the reflected light may not be perfectly linearly polarized, but may be slightly elliptical. Thus, if the off-angle retardation is significantly different from normal incidence retardation, a reduction in performance will occur.

In an embodiment of the present invention, the maximum angle of incidence on the retarder is kept to a minimum. Referring to Figure 2, the angular relationships for light incident on the retarder 203 for two different cases 205A and 205B are depicted. Each case represents the angles which are incident on the retarder across its surface. The incidence angle is measured from a line 207A and 207B normal to the plane of the retarder. In Figure 2, the range of angles (i.e., the cone angles θ₁ and θ₂) for each case are the same. In the first case 205A, however, the cone axis of the cone angle θ₁ is coincident with the normal line 207A. In the second case, the cone axis 209 of the cone angle θ₂ forms a relatively large angle θ_{ca} from the normal line 207B. As will be appreciated, in the second case 205B the maximum angle φ₂ at which light is incident on the retarder is significantly greater that the maximum angle φ₁ for the first case 205A. As the center of the cone axis becomes more perpendicular to the surface of the retarder, the maximum off-axis angle is reduced.

As noted above, in one embodiment of the system depicted in Figure 1, the center of the cone angle incident on the retarder is very close to normal. Since the performance of a retarder can degrade as the angle of incidence gets larger, improved performance may be achieved by reducing the maximum angle. Thus, in accordance with an embodiment of the invention the system performance can be improved while simplifying the construction and reducing costs.

Another problem encountered with the various prior art designs which place a beam splitter adjacent to the screen relates to leakage of light as the light is initially incident on the screen. This problem is described generally in United States Patent 4,969,732. Where a polarization sensitive beam splitter is used, the leak will be a function of the efficiency of the beam splitter in reflecting properly polarized light and the ability of the image source to produce perfectly polarized light. Even when a high efficiency beam splitter is used, such as the above described polymeric multilayer optical film based beam splitters, as much as 10% of light polarized for reflection may leak through the polarization sensitive beam splitter. If light which leaks through the polarization sensitive beam splitter reaches the screen, noticeable ghost images will likely occur.

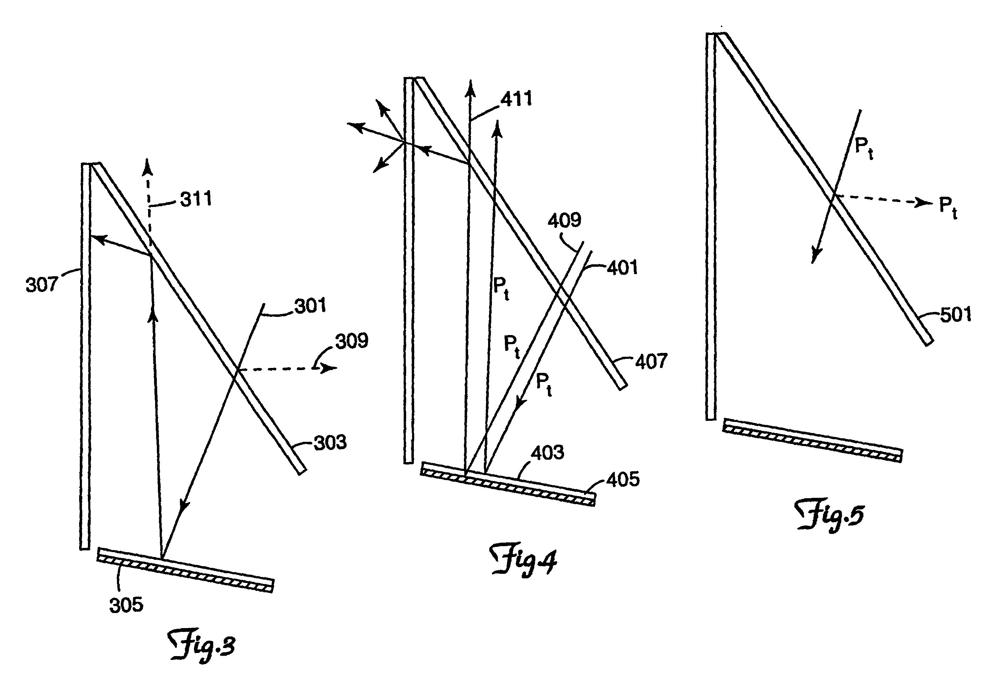

Figure 3 illustrates how the projection arrangement in accordance with the present invention naturally inhibits light improperly transmitted and/or reflected by the polarization sensitive beam splitter from reaching the screen. In Figure 3, a light ray 301 is typically transmitted through the polarization sensitive beam splitter 303, converted by the polarization state converter 305, returned to and reflected by the polarization sensitive beam splitter 303, and transmitted through the screen 307. If a portion of the light leaving the source is incorrectly polarized, it will be harmlessly reflected by the polarization sensitive beam splitter 303 to the back of the projection display as illustrated by light ray 309. Similarly, if a portion of the light leaks through the polarization sensitive beam splitter 303 after conversion by the polarization state converter 305, it is also harmlessly transmitted to the back of the projection display. As the above discussion illustrates, the polarization sensitive beam splitter 303 not only accomplishes its primary function, but also prevents unwanted light from reaching the screen. Thus, certain stray images can be reduced or eliminated from the screen without adding additional components.

Figure 4 illustrates another source of potential ghost images which are reduced or eliminated by the present invention. In certain instances, a light ray 401 may reflect from the front surface 403 of the retarder 405. Because the light ray 401 does not pass through the retarder 405 it substantially maintains its transmission polarization state Pₜ. Such a reflection may be reduced or eliminated by providing an antireflection (AR) coating on the surface 403 of the retarder 405. However, in the present design an AR coating is not necessary to reduce this potential ghost since the light ray 401 will pass through the polarization sensitive beam splitter 407 to the back of the system. Thus, undesirable ghost images are prevented from reaching the screen. While not needed to prevent the stray light from reaching the screen, an AR coating may still be desirable on the surface 403 of the retarder 405 to increase the brightness at the screen.

Light ray 409 illustrates another potential undesirable image. Light ray 409 passes through the retarder 405 as intended. In this case, however, the retarder does not perfectly retard the light ray 409. While the light ray is substantially linearly polarized, a slight ellipticity, for example, may exist (i.e., a small component of the light ray is polarized for transmission) or the polarization may be rotated at an angle slightly different than 90°. The component of the light polarized for transmission is harmlessly passed through the polarization sensitive beam-splitter 407 to the back of the system.

Figure 5 illustrates another potential stray image which is harmlessly directed to the back of the system. This stray light results from correctly polarized light being reflected by the polarization sensitive beam splitter 501. In the present invention, light polarized for transmission Pₜ which reflects from the polarization sensitive beam splitter 501 is reflected to the back of the system and does not reach the screen. The reflection of light correctly polarized for transmission may be a function of the inefficiency of the polarization sensitive beam splitter 501 itself or may be reflected from a laminated surface. In either case, the light exits the system harmlessly. Depending on the construction of the polarization sensitive beam splitter, it may also be desirable to AR coat one or both surfaces of the polarization sensitive beam splitter.

As noted above, the invention is particularly suited for tiling. Rear projection systems generally can be tiled horizontally. The configurations required to get compact depth, however, tend-to inhibit vertical tiling. Figure 6 illustrates an embodiment of the invention in which vertical tiling is achieved. It should be noted that in Figure 6 the overall system is shown in an inverted arrangement from that illustrated in Figure 1. It will be appreciated, however, that either orientation can be tiled.

Figure 6 illustrates two display devices 601A and 601B shown in a vertically tiled orientation. While only two displays are shown, more than two such rear projection display devices may be vertically tiled in a similar manner. The basic operation of the tiled display devices 601A and 601B is the same as that described above. The dashed lines 603A and 603B indicate an area which is available to further compact the design. The area may be used to fold the path of the image source, to house electronics associated with the display, and the like. Moreover, as noted above, a linear polarization sensitive beam splitter can be used with any orientation of linearly polarized light. Thus, the image source may be further compacted by extending the path within the projector in the direction of the projection display width (i.e., a direction orthogonal to a plane of the page of Figure 6).

The housing illustrated in Figure 6 is provided primarily to demonstrate the tiling capability and can be suitably adapted depending on the desired design. For example, the bottom surface may be made flat, as illustrated by line 605, to accommodate placing the display on a flat surface. Alternatively, an adapter piece could be provided which mates with the bottom of the display when used alone. Braces could be used to affix and support the tiled arrangement or the housing could be appropriately modified. It will be appreciated that the housing shape at the sides may be different than that shown in the cross section. For example, the housing may extend upwards at the edges as indicated by line 607, forming a recess in the center of the top of the display device (or bottom in an inverted geometry). The recess may be used to mate with a portion of an adjacent display housing that holds a projector (with appropriate modifications).

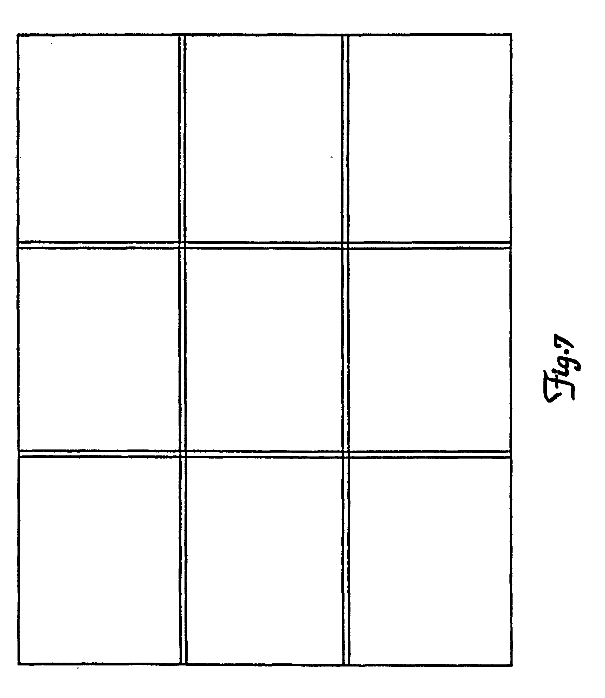

Figure 7 illustrates a front view of nine projection display units of the invention tiled both vertically and horizontally. As will be appreciated, the rear projection display system in accordance with the present invention can provide for virtually seamless tiling in both the vertical and horizontal direction. Moreover, any desired number of such systems may be tiled together in the horizontal and/or, vertical direction. Using control electronics and software known in the art multiple units may be tiled together to form a single integrated image.

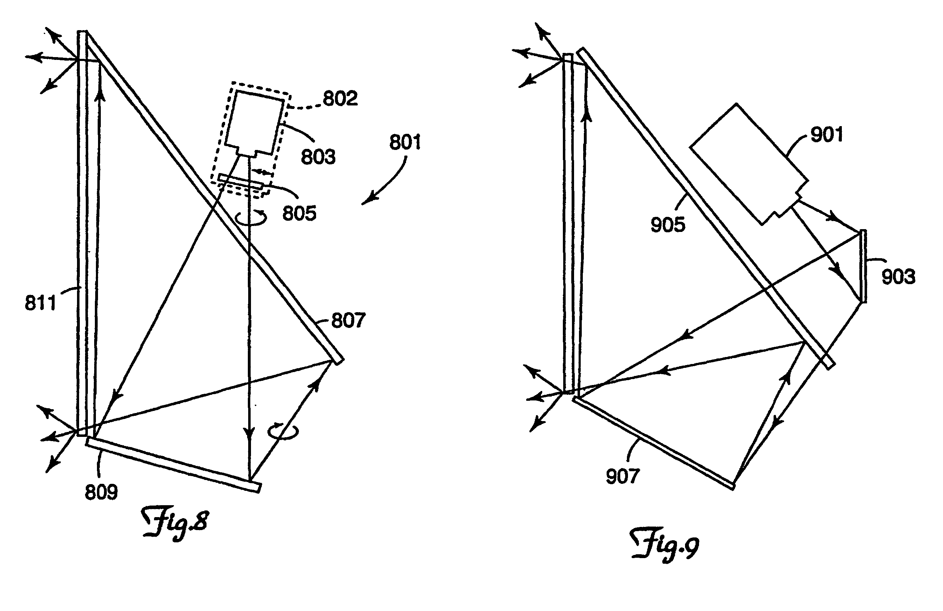

Figure 8 illustrates another particular embodiment of a rear projection display 801 in accordance with the present invention. In Figure 8, an image source 802 projects a circularly polarized image. The projector may include, for example, a projector 803 which produces a linearly polarized image and a 1/4-wave retarder 805 which converts the linearly polarized image to a circularly polarized image. While the retarder is shown external to the projection lens, it will be appreciated that it may be provided within the projection system. In another alternative, the retarder can be disposed on the surface of the polarization sensitive beam splitter facing the projector.

The circularly polarized image is incident on a circular polarization sensitive beam splitter 807. The circular polarization beam splitter 807 may be comprised of a cholesteric polarizer, for example, which transmits circularly polarized light having a first rotation direction and reflects circular polarized light polarized with an opposite rotation direction. A cholesteric polarizer having the above characteristics is described in United States Patent No. 5,573,324.

The circularly polarized image which is output from the image source 802 is polarized with a rotation which transmits through the circular polarization sensitive beam splitter 807. The image is next incident on a polarization state converter 809. The. polarization state convener arrangement may be a planar mirror, which functions to reverse the rotation direction of the circularly polarized light. The mirror may also have a coating to enhance reflection. The mirror reflects the light back towards the circular polarization sensitive beam splitter 807. The light is now polarized with a rotation direction which is reflected by the circular polarization sensitive beam splitter 807 towards a screen 811. The screen 811 may be any suitable rear projection screen such as those described above.

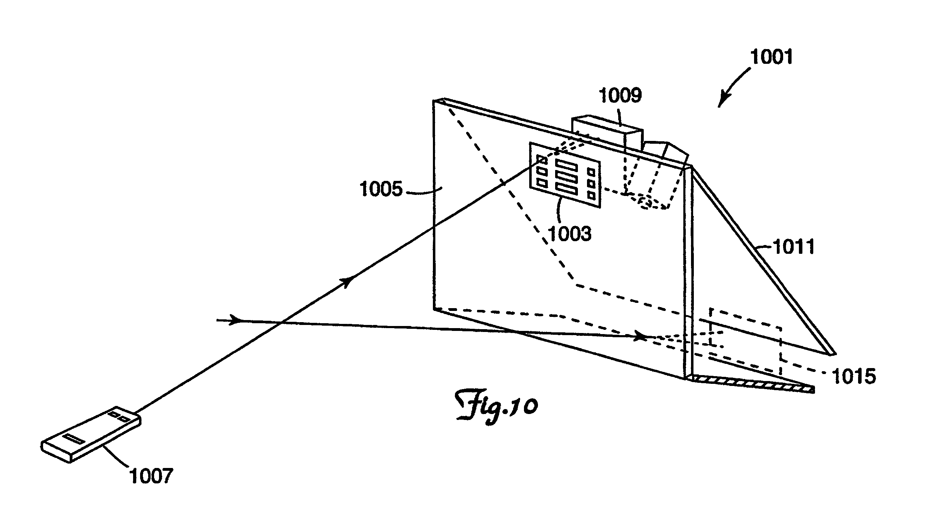

Figure 9 illustrates still another embodiment of the invention. In Figure 9, an extra fold is introduced into the system with the introduction of an additional mirror. In this system, an image source 901 projects an image onto a first mirror 903. The first mirror 903 reflects the image towards a polarization sensitive beam splitter 905, which transmits the light to a polarization state converter 907 such as those described above. The overall operation of the system is similar to the various embodiments described above with appropriate modifications to accommodate the extra fold. For example, if a circular polarization beam splitter is used, the polarization rotation direction of light exiting the image source 901 is opposite to that which transmits through the-beam splitter. In this manner, reflection from the first mirror induces a proper rotation direction to pass the image through the circular polarization sensitive beam splitter 905 on the first pass.

In an alternative embodiment using a circular polarization sensitive beam splitter, the first mirror 903 incorporates an 1/8-wave retarder. In this embodiment, a linearly polarized light source can be used. The linearly polarized light passes through the 1/8-wove retarder, reflects from the mirror and passes back through the 1/8-wave retarder. In this manner, the linearly polarized light is converted to circular polarized light which, by proper selection of the initial linear polarization direction, is polarized to pass through the circular polarization sensitive beam splitter. In a similar manner, a system using a linear polarization sensitive beam splitter could employ a ¼-wave retarder on the mirror 903 to change the linear polarization direction if desired.

Because the polarization sensitive beam splitter is transparent to light of a particular polarization, other optical elements may be placed behind the beam splitter. For example, a light detector such as a charged coupled device (CCD) array or photodiode can be placed behind the beam splitter out of the path of the projected image to detect light impinging on the screen. This arrangement can be used to provide input from a user to the projection system. For example, a remote control device aimed at the screen could be used to control a cursor, select an option, change channels, and the like.

One such embodiment is illustrated in Figure 10. A rear projection display 1001 is adapted for display of an on-screen menu 1003 on the screen 1005 of the display 1001. A remote pointing device 1007 is used to select choices from the on-screen menu 1003. In the illustrated embodiment the remote pointing device includes a laser pointer which provides a visual indication of the location on the screen being selected. As the light from the remote pointing device passes through the screen 1005, it is diffused by the screen. The diffused light is detected by a light sensor 1009, such as a charged coupled device (CCD) array. The light sensor 1009 determines the location on the screen selected by the user via the remote pointing device and produces a signal to the control electronics of the display (not shown) to implement the selected function. Appropriate filters may be provided on the light sensor to filter out light not associated with the remote light source.

As illustrated in Figure 10, the light sensor arrangement 1009 is positioned behind the polarization sensitive beam splitter 1011. Thus, the beam splitter 1011 acts as a window through which the externally generated light passes. The light sensor can, therefore, be positioned anywhere in the system where sufficient room is available. Moreover, rather than an on-screen menu/pointing device configuration, a more conventional remote control such as an infrared (IR) remote control could be used. An IR sensor would be placed behind the screen and polarization sensitive beam splitter to detect IR signals directed generally towards the screen. The operation thereof would be substantially the same as a conventional remote control. This type of remote control function is especially suited for display devices adapted for tiling which do not have a position for an external IR sensor.

In an alternative embodiment, the light sensor can be positioned in the area illustrated by dotted line 1015 between the polarization sensitive beam splitter and the polarization state converter. It will be appreciated that a relatively thin CCD array could be disposed in this area, with corresponding electronics being disposed elsewhere in the system.

When the rear projection display unit is connected to a computer for use as a computer monitor, a remote light source could be used to control the cursor on the monitor. For example, a light sensor could be provided which senses a position at which the light source is transmitted through the screen. This information could then be passed to the computer which would control the cursor to move that point on the screen. Additional capability to select functions could also be provided. In this manner, the operation of the computer could be remotely controlled.

While the present invention has been described with reference to examples above, it should not be limited to the specifics of the examples. Rather, the invention is fully covered as set put in the attached claims.

## Claims

1. A rear projection display, comprising: a screen (109), extending in a first plane, having a predefined height and a width; a polarization sensitive beam splitter (105), extending in a second plane which forms an angle to the first plane, the polarization sensitive beam splitter transmits light of a first polarization state incident on a first surface and reflects light of a second polarization state incident on a second surface opposed to said first surface, a light source (103) projecting a light beam on the first surface of the polarization sensitive beam splitter (105) for transmitting light of the first polarization state through the polarization sensitive beam splitter (105);
**characterized in that** a distance between the screen (109) and a most distant point on the polarization sensitive beam splitter (105) measured along a direction orthogonal to the first plane is less than the smallest dimension of the height and the width of the screen (109) and said display further comprises a polarization state converter (107) for receiving and converting the light transmitted through the polarization sensitive beam splitter (105) from the first polarization state to the second polarization state, the converted light being made incident on said second surface and reflected by the polarization sensitive beam splitter (105) towards the screen (109).

2. A rear projection display as recited in claim 1, wherein the screen (109) comprises a diffuser which diffuses light incident on the rear surface of the screen for transmission through the screen at a desired viewing angle.

3. A rear projection display as recited in claim 2, wherein the rear surface of the screen (109) has a matte surface to reduce reflection of light incident on the rear surface of the screen.

4. A rear projection display as recited in claim 2, wherein the diffuser comprises a bulk diffuser.

5. A rear projection display as recited in claim 2, wherein the screen (109) comprises a beaded screen.

6. A rear projection display as recited in claim 2, wherein the rear surface of the screen (109) has an antireflection coating to reduce reflection of light incident on the rear surface of the screen (109).

7. A rear projection display as recited in claim 1, wherein the polarization sensitive beam splitter (105) comprises a linear polarization sensitive beam splitter which reflects light of one linear polarization state and transmits light of another linear polarization state.

8. A rear projection display as recited in claim 7, wherein the linear polarization sensitive beam splitter (105) comprises a polymeric multilayer optical film disposed on a glass substrate.

9. A rear projection display as recited in claim 8, wherein the polarization state converter (107) comprises a retarder and a mirror, a polarization direction of light linearly polarized in a first direction being substantially rotated by 90° after it passes through the retarder, is reflected by the mirror and passes through the retarder a second time.

10. A rear projection display as recited in claim 9, wherein the retarder is affixed to the mirror.

11. A rear projection display as recited in claim 9, wherein the retarder comprises a ¼-wave retarder.

12. A rear projection display as recited in claim 8, wherein the light source (103) projects an image which is substantially linearly polarized in the first linear polarization state.

13. A rear projection display as recited in claim 1, wherein the polarization sensitive beam splitter (105) comprises a circular polarization sensitive beam splitter.

14. A rear projection display as recited in claim 13, wherein the circular polarization sensitive beam splitter (105) comprises a cholesteric filter.

15. A rear projection display as recited in claim 14, wherein the first polarization state is circularly polarized light having a first rotation direction and the second polarization state is circularly polarized light having an opposite rotation direction.

16. A rear projection display as recited in claim 14, wherein the polarization state converter (107) comprises a planar mirror, reflection by the planar mirror changing the rotation direction of circular polarized light.

17. A rear projection display as recited in claim 16, further comprising a reflection enhancement coating disposed on the mirror.

18. A rear projection display as recited in claim 14, wherein the light source (103) comprises an LCD panel producing an image of linearly polarized light and a retarder to convert the linearly polarized light to circularly polarized light.

19. A rear projection display as recited in claim 1, wherein the top and bottom of the display is adapted to receive a respective bottom and top of other rear projection displays to form a integrated tiled display.

20. A rear projection display as recited in claim 1, wherein the light source (103) projects light onto the polarization sensitive beam splitter at a predetermined cone angle.

21. A rear projection display as recited in claim 20, wherein the angle which the first plane forms with the second plane equals 45° minus one fourth of the predetermined cone angle.

22. A rear projection display as recited in claim 20, wherein the cone angle or the projected image ranges from about 10° to about 50°.

23. A rear projection display as recited in claim 22, wherein the cone angle of the projected image is at least 30°.

24. A rear projection display us recited in claim 22, wherein the cone angle of the projected image ranges from about 30° to 36°.

25. A rear projection display as recited in claim 1, further comprising a light sensor (1009) provided to receive light transmitted through the screen from a point external to the display.

26. A rear projection display as recited In claim 25, wherein the light sensor (1009) is disposed behind the polarization sensitive beam splitter (1011).

27. A rear projection display as recited in claim 25, wherein the rear projection display initiates a specified function in response to light being detected by the light sensor.

28. A method of projecting an image onto a screen in a rear projection display according to claim 1, the method comprising the steps of:
projecting a image onto a first surface of a substantially planar polarization sensitive beam splitter which transmits light of a first polarization state and reflects light of a second polarization state; and
transmitting light of the image having the first polarization state through the polarization sensitive beam splitter;
**characterized in that** it further comprises the steps of:
converting the light transmitted though the polarization sensitive beam splitter from the first polarization state to the second polarization state by means of a polarization state converter, and
reflecting, using the polarization sensitive beam splitter, the light converted to the second polarization state and incident on the second surface of the polarization sensitive beam splitter, towards the screen.

29. A rear projection computer monitor, comprising:
a screen (109) having a predefined height and width dimension; and
a liquid crystal projector (103) as light source, coupled to a computer to receive a video output signal and to project a linearly polarized image corresponding to the video output signal along a folded optical path between the projector (103) and the screen (109), the image being projected at a predetermined cone angle selected to substantially fill the screen; and
said computer monitor **characterized in that** it includes a rear projection display as defined in claim 1, comprising a linear polarization sensitive beam splitter (105), which transmits light of a first polarization state and reflects light of a second polarization state, disposed in the folded optical path between the projector (103) and the screen (109) to first receive light of the first polarization state and second receive light of the second polarization state, wherein a height of the monitor is less than twice the height of the screen and a polarization converter (107) to convert light of said first polarization state to said second polarization state.

## Patentansprüche

1. Rückprojektionsdisplay mit einem Bildschirm (109), der sich in einer ersten Ebene erstreckt und eine vordefinierte Höhe und Breite aufweist; einem polarisationsempfindlichen Strahlteiler (105), der sich in einer zweiten Ebene erstreckt, die einen Winkel mit der ersten Ebene bildet, wobei der polarisationsempfindliche Strahlteiler auf eine erste Fläche einfallendes Licht eines ersten Polarisationszustands durchläßt und auf eine der ersten Fläche gegenüberliegende zweite Fläche einfallendes Licht eines zweiten Polarisationszustands reflektiert, und einer Lichtquelle (103), die einen Lichtstrahl auf die erste Fläche des polarisationsempfindlichen Strahlteilers (105) projiziert, um Licht des ersten Polarisationszustands durch den polarisationsempfindlichen Strahlteiler (105) durchzulassen,
**dadurch gekennzeichnet, daß** ein Abstand zwischen dem Bildschirm (109) und einem am weitesten entfernten Punkt auf dem polarisationsempfindlichen Strahlteiler (105), gemessen entlang einer zur ersten Ebene orthogonalen Richtung, kleiner ist als die kleinste Abmessung von der Höhe und der Breite des Bildschirms (109) und daß das Display ferner einen Polarisationszustandswandler (107) zum Empfangen des vom polarisationsempfindlichen Strahlteiler (105) durchgelassenen Lichts und dessen Umwandeln vom ersten Polarisationszustand in den zweiten Polarisationszustand aufweist, wobei das umgewandelte Licht auf die zweite Fläche einfallen gelassen wird und vom polarisationsempfindlichen Strahlteiler (105) auf den Bildschirm (109) reflektiert wird.

2. Rückprojektionsdisplay nach Anspruch 1, wobei der Bildschirm (109) einen Diffusor aufweist, der auf die rückseitige Fläche des Bildschirms fallendes Licht zur Transmission durch den Bildschirm unter einem gewünschten Betrachtungswinkel streut.

3. Rückprojektionsdisplay nach Anspruch 2, wobei die rückseitige Fläche des Bildschirms (109) eine matte Oberfläche aufweist, um die Reflexion des auf die rückseitige Fläche des Bildschirms fallenden Lichts zu verringern.

4. Rückprojektionsdisplay nach Anspruch 2, wobei der Diffusor einen Volumendiffusor aufweist.

5. Rückprojektionsdisplay nach Anspruch 2, wobei der Bildschirm (109) einen Perlwandbildschirm aufweist.

6. Rückprojektionsdisplay nach Anspruch 2, wobei die rückseitige Fläche des Bildschirms (109) eine Antireflexionsbeschichtung aufweist, um die Reflexion von auf die rückseitige Fläche des Bildschirms (109) fallendem Licht zu verringern.

7. Rückprojektionsdisplay nach Anspruch 1, wobei der polarisationsempfindliche Strahlteiler (105) einen für lineare Polarisation empfindlichen Strahlteiler aufweist, der Licht eines linearen Polarisationszustands reflektiert und Licht eines anderen linearen Polarisationszustands durchläßt.

8. Rückprojektionsdisplay nach Anspruch 7, wobei der für lineare Polarisation empfindliche Strahlteiler (105) einen auf einem Glassubstrat angeordneten mehrschichtigen optischen Polymerfilm aufweist.

9. Rückprojektionsdisplay nach Anspruch 8, wobei der Polarisationszustandswandler (107) ein Verzögerungselement und einen Spiegel aufweist, wobei eine Polarisationsrichtung von in einer ersten Richtung linear polarisiertem Licht im wesentlichen um 90° gedreht ist, nachdem es durch das Verzögerungselement getreten ist, vom Spiegel reflektiert wird und ein zweites Mal durch das Verzögerungselement tritt.

10. Rückprojektionsdisplay nach Anspruch 9, wobei das Verzögerungselement am Spiegel befestigt ist.

11. Rückprojektionsdisplay nach Anspruch 9, wobei das Verzögerungselement ein Viertelwellenlängen-Verzögerungselement aufweist.

12. Rückprojektionsdisplay nach Anspruch 8, wobei die Lichtquelle (103) ein Bild projiziert, das im ersten linearen Polarisationszustand im wesentlichen linear polarisiert ist.

13. Rückprojektionsdisplay nach Anspruch 1, wobei der polarisationsempfindliche Strahlteiler (105) einen für zirkulare Polarisation empfindlichen Strahlteiler aufweist.

14. Rückprojektionsdisplay nach Anspruch 13, wobei der für zirkulare Polarisation empfindliche Strahlteiler (105) ein cholesterisches Filter aufweist.

15. Rückprojektionsdisplay nach Anspruch 14, wobei der erste Polarisationszustand aus zirkular polarisiertem Licht mit einer ersten Drehrichting besteht und der zweite Polarisationszustand aus zirkular polarisiertem Licht mit einer entgegengesetzten Drehrichtung besteht.

16. Rückprojektionsdisplay nach Anspruch 14, wobei der Polarisationszustandswandler (107) einen ebenen Spiegel aufweist, wobei die Reflexion durch den ebenen Spiegel die Drehrichtung des zirkular polarisierten Lichts ändert.

17. Rückprojektionsdisplay nach Anspruch 16, welche weiter eine am Spiegel angeordnete Reflexionsverstärkungsbeschichtung aufweist.

18. Rückprojektionsdisplay nach Anspruch 14, wobei die Lichtquelle (103) ein LCD-Feld, das ein Bild linear polarisierten Lichts erzeugt, und ein Verzögerungselement zum Umwandeln des linear polarisierten Lichts in zirkular polarisiertes Licht aufweist.

19. Rückprojektionsdisplay nach Anspruch 1, wobei der Oberteil und der Unterteil des Displays dafür ausgelegt sind, einen entsprechenden Unterteil und Oberteil anderer Rückprojektionsdisplays aufzunehmen, um ein integriertes fliesenförmig angeordnetes Display zu bilden.

20. Rückprojektionsdisplay nach Anspruch 1, wobei die Lichtquelle (103) Licht unter einem vorgegebenen Kegelwinkel auf den polarisationsempfindlichen Strahlteiler projiziert.

21. Rückprojektionsdisplay nach Anspruch 20, wobei der Winkel, den die erste Ebene mit der zweiten Ebene bildet, 45° minus einem Viertel des vorgegebenen Kegelwinkels beträgt.

22. Rückprojektionsdisplay nach Anspruch 20, wobei der Kegelwinkel des projizierten Bilds etwa 10° bis etwa 50° beträgt.

23. Rückprojektionsdisplay nach Anspruch 22, wobei der Kegelwinkel des projizierten Bilds mindestens 30° beträgt.

24. Rückprojektionsdisplay nach Anspruch 22, wobei der Kegelwinkel des projizierten Bilds etwa 30° bis 36° beträgt.

25. Rückprojektionsdisplay nach Anspruch 1, welches weiter einen Lichtsensor (1009) aufweist, der bereitgestellt ist, um von einem Punkt außerhalb des Displays vom Bildschirm durchgelassenes Licht zu empfangen.

26. Rückprojektionsdisplay nach Anspruch 25, wobei der Lichtsensor (1009) hinter dem polarisationsempfindlichen Strahlteiler (1011) angeordnet ist.

27. Rückprpjektionsdisplay nach Anspruch 25, wobei das Rückprojektionsdisplay ansprechend auf vom Lichtsensor erfaßtes Licht eine spezifizierte Funktion einleitet.

28. Verfahren zum Projizieren eines Bilds auf einen Bildschirm in einem Rückprojektionsdisplay nach Anspruch 1 mit den Schritten:
Projizieren eines Bilds auf eine erste Fläche eines im wesentlichen ebenen polarisationsempfindlichen Strahlteilers, der Licht eines ersten Polarisationszustands durchläßt und Licht eines zweiten Polarisationszustands reflektiert, und
Hindurchführen von Licht des Bilds mit dem ersten Polarisationszustand durch den polarisationsempfindlichen Strahlteiler,
**dadurch gekennzeichnet, daß** es die folgenden weiteren Schritte aufweist:
Umwandeln des vom polarisationsempfindlichen Strahlteiler durchgelassenen Lichts vom ersten Polarisationszustand in den zweiten Polarisationszustand mittels eines Polarisationszustandswandlers und
Reflektieren des in den zweiten Polarisationszustand umgewandelten und auf die zweite Fläche des polarisationsempfindlichen Strahlteilers fallenden Lichts auf den Bildschirm unter Verwendung des polarisationsempfindlichen Strahlteilers.

29. Rückprojektions-Computermonitor mit
einem Bildschirm (109), der eine vordefinierte Höhen- und Breitenabmessung aufweist, und
einem Flüssigkristallprojektor (103) als Lichtquelle, der mit einem Computer gekoppelt ist, um ein Videoausgangssignal zu empfangen und ein dem Videoausgangssignal entsprechendes linear polarisiertes Bild entlang eines gefalteten optischen Wegs zwischen dem Projektor (103) und dem Bildschirm (109) zu projizieren, wobei das Bild unter einem vorbestimmten Kegelwinkel projiziert wird, der so ausgewählt ist, daß der Bildschirm im wesentlichen ausgefüllt wird, und
wobei der Computermonitor **dadurch gekennzeichnet ist, daß** er aufweist: ein Rückprojektionsdisplay nach Anspruch 1 aufweist, welches einen für lineare Polarisation empfindlichen Strahlteiler (105), der Licht eines ersten Polarisationszustands durchläßt und Licht eines zweiten Polarisationszustands reflektiert, welcher im gefalteten optischen Weg zwischen dem Projektor (103) und dem Bildschirm (109) angeordnet ist, um erstens Licht des ersten Polarisationszustands zu empfangen und zweitens Licht des zweiten Polarisationszustands zu empfangen, wobei die Höhe des Monitors kleiner ist als das Doppelte der Höhe des Bildschirms, und einen Polarisationswandler (107) zum Umwandeln von Licht des ersten Polarisationszustands in den zweiten Polarisationszustand.

## Revendications

1. Dispositif d'affichage par transparence comprenant un écran (109) s'étendant dans un premier plan, ayant une hauteur et une largeur prédéfinies ; un séparateur de faisceau sensible à la polarisation (105) s'étendant dans un second plan formant un certain angle par rapport au premier plan, le séparateur de faisceau sensible à la polarisation transmettant la lumière d'un premier état de polarisation incidente sur une première surface et réfléchissant la lumière d'un second état de polarisation incidente sur une seconde surface opposée à ladite première surface, une source de lumière (103) projetant un .faisceau de lumière sur la première surface du séparateur de faisceau sensible à la polarisation (105) pour transmettre la lumière du premier état de polarisation à travers le séparateur de faisceau sensible à la polarisation (105) ;
**caractérisé en ce que** la distance entre l'écran (109) et le point le plus éloigné sur le séparateur de faisceau sensible à la polarisation (105), mesurée dans une direction orthogonale au premier plan, est inférieure à la plus petite dimension entre la hauteur et la largeur de l'écran (109) et ledit dispositif d'affichage comprend en outre un convertisseur d'état de polarisation (107) pour recevoir et convertir la lumière transmise à travers le séparateur de faisceau sensible à la polarisation (105), du premier état de polarisation au second état de polarisation, la lumière convertie étant rendue incidente sur ladite seconde surface et réfléchie par le séparateur de faisceau sensible à la polarisation (105) vers l'écran (109).

2. Dispositif d'affichage par transparence selon la revendication 1, dans lequel l'écran (109) comprend un diffuseur qui diffuse la lumière incidente sur la surface arrière de l'écran, pour être transmise à travers l'écran selon un angle d'observation désiré.

3. Dispositif d'affichage par transparence selon la revendication 2, dans lequel la surface arrière de l'écran (109) comporte une surface mate pour réduire la réflexion de la lumière incidente sur la surface arrière de l'écran.

4. Dispositif d'affichage par transparence selon la revendication 2, dans lequel le diffuseur est constitué d'un diffuseur massif.

5. Dispositif d'affichage par transparence selon la revendication 2, dans lequel l'écran (109) est constitué d'un écran perlé.

6. Dispositif d'affichage par transparence selon la revendication 2, dans lequel la surface arrière de l'écran (109) comporte un revêtement antiréflexion pour atténuer la réflexion de la lumière incidente sur la surface arrière de l'écran (109).

7. Dispositif d'affichage par transparence selon la revendication 1, dans lequel le séparateur de faisceau sensible à la polarisation (105) est constitué d'un séparateur de faisceau sensible à la polarisation linéaire qui réfléchit la lumière d'un état de polarisation linéaire et transmet la lumière d'un autre état de polarisation linéaire.

8. Dispositif d'affichage par transparence selon la revendication 7, dans lequel le séparateur de faisceau sensible à la polarisation linéaire (105) comprend un film optique multicouche polymère disposé sur un substrat en verre.

9. Dispositif d'affichage par transparence selon la revendication 8, dans lequel le convertisseur d'état de polarisation (107) comprend un retardateur et un miroir, la direction de polarisation de la lumière polarisée linéairement dans une première direction étant sensiblement tournée de 90° après avoir traversé le retardateur, avoir été réfléchie par le miroir et avoir traversé le retardateur une seconde fois.

10. Dispositif d'affichage par transparence selon la revendication 9, dans lequel le retardateur est fixé au miroir.

11. Dispositif d'affichage par transparence selon la revendication 9, dans lequel le retardateur est constitué d'un retardateur en 1/4 d'onde.

12. Dispositif d'affichage par transparence selon la revendication 8, dans lequel la source de lumière (103) projette une image polarisée sensiblement linéairement dans le premier état de polarisation.

13. Dispositif d'affichage par transparence selon la revendication 1, dans lequel le séparateur de faisceau sensible à la polarisation (105) est constitué d'un séparateur de faisceau sensible à la polarisation circulaire.

14. Dispositif d'affichage par transparence selon la revendication 13, dans lequel le séparateur de faisceau sensible à la polarisation circulaire (105) comprend un filtre cholestérique.

15. Dispositif d'affichage par transparence selon la revendication 14, dans lequel le premier état de polarisation est de la lumière polarisée de façon circulaire ayant un premier sens de rotation et le second état de polarisation est de la lumière polarisée de façon circulaire ayant un sens de rotation opposée.

16. Dispositif d'affichage par transparence selon la revendication 14, dans lequel le convertisseur d'état de polarisation (107) comprend un miroir plan, la réflexion par le miroir plan modifiant le sens de rotation de la lumière polarisée de façon circulaire.

17. Dispositif d'affichage par transparence selon la revendication 16, comprenant en outre un revêtement renforçant la réflexion, disposé sur le miroir.

18. Dispositif d'affichage par transparence selon la revendication 14, dans lequel la source de lumière (103) comprend un panneau à LCD produisant une image de lumière polarisée linéairement et un retardateur pour convertir la lumière polarisée linéairement en lumière polarisée de façon circulaire.

19. Dispositif d'affichage par transparence selon la revendication 1, dans lequel le haut et le bas du dispositif d'affichage sont adaptés à recevoir le bas et le haut respectifs d'autres dispositifs d'affichage par transparence pour constituer un dispositif d'affichage à panneaux intégrés.

20. Dispositif d'affichage par transparence selon la revendication 1, dans lequel la source de lumière (103) projette de la lumière sur le séparateur de faisceau sensible à la polarisation selon un angle de cône prédéterminé.

21. Dispositif d'affichage par transparence selon la revendication 20, dans lequel l'angle formé par le premier plan avec le second plan est égal à 45° moins le quart de l'angle de cône prédéterminé.

22. Dispositif d'affichage par transparence selon la revendication 20, dans lequel l'angle de cône de l'image projetée s'étend d'environ 10° à environ 50°.

23. Dispositif d'affichage par transparence selon la revendication 22, dans lequel l'angle de cône de l'image projetée est d'au moins 30°.

24. Dispositif d'affichage par transparence selon la revendication 22, dans lequel l'angle de cône de l'image projetée s'étend d'environ 30° à 36°.

25. Dispositif d'affichage par transparence selon la revendication 1, comprenant en outre un capteur de lumière (1009) prévu pour recevoir la lumière transmise à travers l'écran depuis un point externe au dispositif d'affichage.

26. Dispositif d'affichage par transparence selon la revendication 25, dans lequel le capteur de lumière (1009) est disposé derrière le séparateur de faisceau sensible à la polarisation (1011).

27. Dispositif d'affichage par transparence selon la revendication 25, dans lequel le dispositif d'affichage par transparence initialise une fonction spécifiée en réponse à la détection de lumière par le capteur de lumière.

28. Procédé de projection d'une image sur un écran dans un dispositif d'affichage par transparence selon la revendication 1, le procédé comprenant les étapes consistant à :
projeter une image sur une première surface d'un séparateur de faisceau sensible à la polarisation, sensiblement plan, qui transmet la lumière d'un premier état de polarisation et réfléchit la lumière d'un second état de polarisation ; et
transmettre la lumière de l'image ayant le premier état de polarisation à travers le séparateur de faisceau sensible à la polarisation ;
**caractérisé en ce qu'**il comprend en outre les étapes consistant à :
convertir la lumière transmise à travers le séparateur de faisceau sensible à la polarisation, du premier état de polarisation au second état de polarisation, au moyen d'un convertisseur d'état de polarisation ; et
réfléchir, en utilisant le séparateur de faisceau sensible à la polarisation, la lumière convertie dans le second état de polarisation et incidente sur la seconde surface du séparateur de faisceau sensible à la polarisation, vers l'écran.

29. Moniteur d'ordinateur pour rétroprojection, comprenant :
un écran (109) ayant des dimensions de hauteur et de largeur prédéfinies ; et
un projecteur à cristaux liquides (103) en tant que source de lumière, couplé à un ordinateur pour recevoir un signal de sortie vidéo et pour projeter une image polarisée linéairement correspondant au signal de sortie vidéo le long d'un trajet optique replié entre le projecteur (103) et l'écran (109), l'image étant projetée selon un angle de cône prédéterminé choisi pour remplir sensiblement l'écran ; et
ledit moniteur d'ordinateur étant **caractérisé en ce qu'**il comporte un dispositif d'affichage par transparence selon la revendication 1, comprenant un séparateur de faisceau sensible à la polarisation linéaire (105) qui transmet la lumière d'un premier état de polarisation et réfléchit la lumière d'un second état de polarisation, disposé dans le trajet optique replié entre le projecteur (103) et l'écran (109) pour recevoir d'abord la lumière du premier état de polarisation et recevoir ensuite la lumière du second état de polarisation, dans lequel la hauteur du moniteur est inférieure au double de la hauteur de l'écran et un convertisseur de polarisation (107) pour convertir la lumière dudit premier état de polarisation dans ledit second état de polarisation.
